(19) Europäisches Patentamt
European Patent Office
Office européen des brevets

(11) **EP 4 348 814 B1**

(12) **EUROPÄISCHE PATENTSCHRIFT**

(45) Veröffentlichungstag und Bekanntmachung des Hinweises auf die Patenterteilung:
**19.03.2025 Patentblatt 2025/12**

(21) Anmeldenummer: **22732928.1**

(22) Anmeldetag: **25.05.2022**

(51) Internationale Patentklassifikation (IPC):
*H02K 35/02* (2006.01)   *H02K 7/09* (2006.01)
*H02K 7/18* (2006.01)

(52) Gemeinsame Patentklassifikation (CPC):
**H02K 35/02; H02K 7/1876;** H02K 7/09

(86) Internationale Anmeldenummer:
**PCT/EP2022/064217**

(87) Internationale Veröffentlichungsnummer:
**WO 2022/248559 (01.12.2022 Gazette 2022/48)**

(54) **VORRICHTUNG UND SYSTEM ZUR UMWANDLUNG VON MECHANISCHER ENERGIE IN ELEKTRISCHE ENERGIE**

DEVICE AND SYSTEM FOR CONVERTING MECHANICAL ENERGY INTO ELECTRICAL ENERGY

DISPOSITIF ET SYSTÈME DE CONVERSION DE L'ÉNERGIE MÉCANIQUE EN ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.05.2021 EP 21175873**

(43) Veröffentlichungstag der Anmeldung:
**10.04.2024 Patentblatt 2024/15**

(73) Patentinhaber: **REPS-Tirol GmbH
6111 Volders (AT)**

(72) Erfinder:
• **HUBER, Alfons
6020 Innsbruck (AT)**
• **PLATTNER, Stephan
6471 Arzl im Pitztal (AT)**

(74) Vertreter: **Vossius & Partner
Patentanwälte Rechtsanwälte mbB
Siebertstrasse 3
81675 München (DE)**

(56) Entgegenhaltungen:
DE-B- 1 145 225     KR-B1- 101 958 685
US-A- 4 239 974     US-A1- 2007 257 495
US-A1- 2013 342 036

**Beschreibung**

Die vorliegende Offenbarung betrifft Vorrichtungen und Systeme zur Umwandlung von mechanischer Energie in elektrische Energie, insbesondere in Bodenbelagsystemen.

Energiewandler zur Befahrung auf Straßen (beispielsweise der Autobahn) werden bisher im Stand der Technik nicht genutzt. Im Stand der Technik sind lediglich Energiewandler für Fußgänger auf Gehwegen bekannt, die von Dynamos und piezoelektrischen Mechanismen betrieben werden.

DE 11 45 225 B Impulsgeber zum Erzeugen konstanter elektrischer Impulse im Ansprechen auf vorbestimmte mechanische Bewegungen.

US 4,239,974 A betrifft ein Stromerzeugungssystem zur Erzeugung von elektrischer Energie und insbesondere ein Stromerzeugungssystem, das die ansonsten verschwendete Energie von Kraftfahrzeugen, die sich auf einer Fahrbahn bewegen, als Energiequelle nutzt.

US 2013/342036 A1 betrifft einen schwingungsbasierten Stromgenerator, der an einer Struktur, wie z.B. einer Wandfläche, einem Straßenschild, einer Fahrzeugkarosserie und einer Eisenbahnbrücke, befestigt ist und den elektrischen Strom aus der Vibration der Struktur erzeugt.

US 2007/257495 A1 betrifft einen Energieerzeuger, der eine im Allgemeinen ebene und teilweise flexible Verkehrsfläche umfasst, auf der Fußgänger und Verkehr passieren können, wobei sich unter der Verkehrsfläche eine Vielzahl von Dynamozellen mit jeweils einem Dynamo darin befinden.

KR 10-1958685 B1 betrifft eine auf einer Straße installierte Stromerzeugungsvorrichtung, die auf einer Straße installiert ist.

Der vorliegenden Offenbarung liegt die Aufgabe zugrunde, Vorrichtungen und Systeme bereitzustellen, die die gegenüber bekannten Systemen im Stand der Technik einen verbesserten Wirkungsgrad aufweisen.

Diese Aufgabe wird mit den Merkmalen der unabhängigen Patentansprüche gelöst. Die abhängigen Patentansprüche beziehen sich auf weitere Aspekte.

Gemäß einem Beispiel der vorliegenden Offenbarung wird eine Vorrichtung zur Umwandlung von mechanischer Energie in elektrische Energie für ein System, vorzugsweise ein Bodenbelagsystem, bereitgestellt. Die Vorrichtung aufweisend: einen ersten Magneten und einen zweiten Magneten, wobei der erste Magnet oberhalb des zweiten Magneten mit einem vorbestimmten Abstand und in Richtung des zweiten Magneten beweglich angeordnet ist und wobei die jeweils gleichen Pole des ersten Magneten und des zweiten Magneten zueinander ausgerichtet sind; eine erste Spule mit einer vorbestimmten Anzahl an Windungen und einem durch die Windungen gebildeten Innenraum, wobei die erste Spule den ersten Magneten bei einer Bewegung in Richtung des zweiten Magneten in ihrem Innenraum aufnimmt und eine entsprechende Induktionsspannung erzeugt; eine zweite Spule mit einer vorbestimmten Anzahl an Windungen und einem durch die Windungen gebildeten Innenraum, wobei die zweite Spule unterhalb der ersten Spule angeordnet ist und senkrecht zur ersten Spule ausgerichtet ist, wobei die zweite Spule zumindest teilweise um den zweiten Magneten herum angeordnet ist und bei einer Bewegung des ersten Magneten in Richtung des zweiten Magneten eine Spannung erzeugt.

Gemäß einem Aspekt der vorliegenden Offenbarung wird eine Vorrichtung zur Umwandlung von mechanischer Energie in elektrische Energie für ein System, vorzugsweise ein Bodenbelagsystem bereitgestellt. Die Vorrichtung aufweisend: einen ersten Magneten und einen zweiten Magneten, wobei der erste Magnet von dem zweiten Magneten mit einem vorbestimmten Abstand und in Richtung des zweiten Magneten beweglich angeordnet ist und wobei die jeweils gleichen Pole des ersten Magneten und des zweiten Magneten zueinander ausgerichtet sind; eine erste Spule mit einer vorbestimmten Anzahl an Windungen und einem durch die Windungen gebildeten Innenraum, wobei die Windungen der ersten Spule in im Wesentlichen parallelen Ebenen gewickelt sind, wobei die erste Spule den ersten Magneten bei einer Bewegung in Richtung des zweiten Magneten in ihrem Innenraum aufnimmt und eine entsprechende Induktionsspannung erzeugt; eine zweite Spule mit einer vorbestimmten Anzahl an Windungen und einem durch die Windungen gebildeten Innenraum, wobei die Windungen der zweiten Spule im Wesentlichen in einer Oberfläche enthalten sind, die senkrecht zur ersten Spule steht, wobei die zweite Spule mit einem vorbestimmten Abstand in Richtung des zweiten Magneten von der ersten Spule angeordnet ist, wobei die zweite Spule zumindest teilweise um den zweiten Magneten herum angeordnet ist und bei einer Bewegung des ersten Magneten in Richtung des zweiten Magneten eine Spannung erzeugt.

Verschiedene Ausführungsformen können vorzugsweise die folgenden Merkmale implementieren.

Die zweite Spule hat vorzugsweise die Form eines Ellipsenrings, der um den zweiten Magneten herum angeordnet ist. Die beiden Hauptscheitelpunkte des Ellipsenrings treffen sich vorzugsweise an einem Punkt in Umfangsrichtung des zweiten Magneten, ohne sich dabei zu berühren, d.h. die beiden Hauptscheitelpunkte des Ellipsenrings haben einen vorbestimmten Abstand zueinander.

Die beiden Hauptscheitelpunkte des Ellipsenrings liegen vorzugsweise in einer Ebene parallel zum ersten und zweiten Magneten.

Vorzugsweise ist einer der Nebenscheitel des Ellipsenrings oberhalb des zweiten Magneten angeordnet und der andere Nebenscheitel des Ellipsenrings ist unterhalb des ersten Nebenscheitels angeordnet (vorzugsweise auf Höhe des zweiten Magneten), wobei oberhalb einen Versatz in Richtung des ersten Magneten bezeichnet.

Die vorstehenden geometrischen Bezeichnungen beziehen sich auf die Verwendung einer ersten und/oder zweiten Ringspule. Die Verwendung einer ersten und/oder zweiten Ringspule ist insbesondere bevorzugt in Verbindung mit einem ersten und/oder zweiten Magneten mit einer zylindrischen Form. Dem Fachmann wird klar sein, dass die entsprechenden Beziehungen der Spulen und Magneten zueinander entsprechend der gewählten Formen der Magnete und/oder Spulen in äquivalenter Form gelten. Wird beispielsweise ein erster und oder zweiter Magnet mit einer rechteckigen Form verwendet, kann vorzugsweise eine erste und/oder zweite Spule mit einem rechteckigen Hohlprofil verwendet werden, wobei die vorstehend beschriebenen Beziehungen und Lagen zwischen Magneten und Spulen entsprechend gelten.

Die Vorrichtung weist vorzugsweise einen ersten Stator, der auf einer dem zweiten Magneten abgewandten Seite des ersten Magneten angeordnet ist und einen zweiten Stator auf, der auf einer dem ersten Magneten abgewandten Seite des zweiten Magneten angeordnet ist.

Der erste und/oder der zweite Magnet weist vorzugsweise eine zylindrische, rechteckige, würfelige, kegelige, kugelige, oder pyramidenförmige Form auf.

Der erste und/oder zweite Magnet kann ein einziger Magnet oder ein aus mehreren Einzelmagneten zusammengesetzter Magnet sein.

In einer Ausführungsform weisen der erste und/oder zweite Magnet eine Zylinderform auf, um bei der Abstoßungsspule (zweite Spule) keine abgreifbare Magnetfeldänderung bzw. Fläche zu verlieren.

Vorzugsweise weist die Vorrichtung ferner auf: ein erstes Eisenelement, vorzugsweise ein erstes Stahlelement, das unterhalb (auf der dem zweiten Magneten zugewandten Seite) des ersten Magneten angeordnet ist; und ein zweites Eisenelement, vorzugsweise ein zweites Stahlelement, das in dem Innenraum der zweiten Spule angeordnet ist.

Das erste Eisenelement ist vorzugsweise an der dem zweiten Magneten zugewandten Seite des ersten Magneten angeordnet und die erste Spule nimmt vorzugsweise den ersten Magneten und das erste Eisenelement bei einer Bewegung in Richtung des zweiten Magneten in ihrem Innenraum auf, wobei das erste Eisenelement vorzugsweise mit dem Rand des ersten Magneten bündig abschließt.

Das erste Eisenelement weist vorzugsweise eine Ringform auf. Das zweite Eisenelement weist vorzugsweise eine Ringform mit einem Spalt auf. Wie vorstehend beschrieben, können die Magnete und Spulen verschiedene Geometrien/Formen aufweisen. Dem Fachmann wird klar sein, dass das erste und/oder zweite Eisenelement vorzugsweise eine entsprechende Form aufweist.

Vorzugsweise sind der erste und zweite Magnet, vorzugsweise ausschließlich, durch die gegenseitige Abstoßung ohne äußere Krafteinwirkung in einer Ausgangslage, die dem vorbestimmten Abstand entspricht, zueinander ausgerichtet.

Der erste und zweite Magnet sind vorzugsweise eingerichtet, bei einer äußeren Krafteinwirkung den ersten Magneten in Richtung des zweiten Magneten zu bewegen.

Der erste und zweite Magnet sind vorzugsweise eingerichtet, nach einer äußeren Krafteinwirkung, vorzugsweise ausschließlich, durch die gegenseitige Abstoßung in die Ausgangslage zurückzukehren.

Die Vorrichtung weist vorzugsweise ferner auf: ein erstes Plattenelement, das auf einer dem zweiten Magneten abgewandten Seite des ersten Magneten angeordnet ist und ein zweites Plattenelement, das auf einer dem ersten Magneten abgewandten Seite des zweiten Magneten angeordnet ist, wobei der erste und zweite Stator vorzugsweise jeweils zwischen dem ersten und zweiten Plattenelement und dem entsprechenden ersten und zweiten Magneten angeordnet sind.

Das erste Plattenelement ist vorzugsweise von dem zweiten Plattenelement mit einem vorbestimmten Abstand angeordnet bzw. von dem zweiten Plattenelement mit einem vorbestimmten Abstand angeordnet ist.

Der erste und zweite Stator, der erste und zweite Magnet und die erste und zweite Spule sind vorzugsweise in einem durch das erste und zweite Plattenelement gebildeten Raum angeordnet.

Das erste und/oder zweite Plattenelement weist vorzugsweise mindestens einen Luftschlitz zur Verhinderung von Luftkompression in dem durch das erste und zweite Plattenelement gebildeten Raum auf.

Die Vorrichtung weist ferner eine dritte Spule mit einer vorbestimmten Anzahl an Windungen auf, wobei die dritte Spule zwischen dem ersten Magneten und dem zweiten Magneten angeordnet ist und einen vorbestimmten Abstand zu dem ersten Magneten aufweist.

Vorzugsweise weist die dritte Spule einen Außendurchmesser auf, der kleiner ist als der Innendurchmesser der ersten Spule.

Vorzugsweise weist die dritte Spule einen Außendurchmesser auf, der im Wesentlichen einem Außendurchmesser des zweiten Magneten entspricht.

Vorzugsweise weist die Vorrichtung lediglich den zweiten Eisenring auf, wenn die Vorrichtung die dritte Spule aufweist. Mit anderen Worten, es ist bevorzugt, dass die Vorrichtung keinen ersten Eisenring aufweist, wenn die dritte Spule vorhanden ist.

Vorzugsweise ist die dritte Spule zumindest teilweise in einer Ebene mit dem zweiten Eisenring angeordnet.

Vorzugsweise sind die Windungen der dritten Spule in im Wesentlichen parallelen Ebenen gewickelt.

Vorzugsweise sind die Windungen der zweiten Spule im Wesentlichen in einer Oberfläche enthalten, die senkrecht zur dritten Spule steht.

Vorzugsweise weist die Vorrichtung, zusätzlich der dritten Spule, eine vierte Spule mit einer vorbestimmten Anzahl an Windungen auf, wobei die vierte Spule oberhalb des ersten Magneten angeordnet ist. Mit anderen Worten, die vierte Spule ist auf der dem zweiten Magneten abgewandten Seite des ersten Magneten angeordnet (d.h. der erste Magnet befindet sich zwischen der ersten und der vierten Spule).

Vorzugsweise weist die vierte Spule einen Außendurchmesser auf, der größer ist als der Außendurchmesser des ersten Magneten.

Vorzugsweise weist die vierte Spule einen Außendurchmesser auf, der im Wesentlichen gleich dem Außendurchmesser der ersten Spule ist.

Vorzugsweise sind die Windungen der zweiten Spule im Wesentlichen in einer Oberfläche enthalten, die senkrecht zur vierten Spule steht.

Vorzugsweise sind die Windungen der vierten Spule in im Wesentlichen parallelen Ebenen gewickelt.

Vorzugsweise sind die Windungen der vierten Spule im Wesentlichen in einer Oberfläche enthalten, die parallel zur dritten Spule steht.

Gemäß einem weiteren Aspekt der vorliegenden Offenbarung wird ein System, vorzugsweise ein Bodenbelagsystem, zur Umwandlung von mechanischer Energie in elektrische Energie mit mindestens einer der vorstehend beschriebenen Vorrichtung bereitgestellt.

Verschiedene Ausführungsformen können vorzugsweise die folgenden Merkmale implementieren.

Vorzugsweise sind mehrere der vorstehend beschriebenen Vorrichtungen in einem Raum angeordnet, der durch mindestens ein Seitenelement, ein Bodenelement und ein Deckenelement gebildet wird, wobei die mehreren Vorrichtungen vorzugsweise symmetrisch in dem Raum angeordnet sind und wobei besonders bevorzugt eine erste Vorrichtung zentriert in dem Raum angeordnet ist und weitere Vorrichtungen symmetrisch um die erste Vorrichtung in dem Raum angeordnet sind.

Vorzugsweise weist der erste Stator eine Welle auf der dem ersten Magneten abgewandten Seite auf, die die einwirkende Kraft aufnimmt und so den ersten Stator samt ersten Magnet in Richtung des unteren statischen zweiten Magneten bewegt.

Die Führung der Welle wird vorzugsweise durch die Anbringung einer entsprechenden Lagerung sichergestellt.

Vorzugsweise wird das Lager durch ein Sicherungsring in Position gehalten.

Die Welle samt erster Stator und erster Magnet weisen vorzugsweise im Ausgangszustand einen vorbestimmten Abstand zum unteren zweiten Magneten auf.

Das obere Plattenelement (Abdeckung) dient zusätzlich als Anschlag bei der Rückführung der Welle nach erfolgter Krafteinwirkung. Unteranderem wird dadurch das auftretende Schwingverhalten nach der Krafteinwirkung verhindert bzw. abrupt gestoppt.

Das Bodenbelagsystem kann auch als "Road Energy Production System" (REPS) bezeichnet werden und entspricht in einer Ausführungsform einem Energiewandler für Straßen/Gehwege. Die Ausführungsformen sind nicht auf Bodenbelagsysteme beschränkt. Ein Fachmann auf dem Gebiet wird verstehen, dass die vorstehend beschriebenen Vorrichtungen in verschiedenen anderen Systemen zum "energy harvesting" verwendet werden kann, insbesondere in Systemen mit linearen Bewegungen bzw. bei senkrecht auf die Vorrichtung wirkende Kräfte.

Insbesondere sind die hier beschriebenen Vorrichtungen in der Größe frei skalierbar und können dadurch beispielsweise in Türklinken verbaut werden, um Verbraucher (mit niedrigem Energiebedarf) zu speisen oder beispielsweise in Gondeln, um deren verlorene Energie, durch zu hohe Schwingungen, abzugreifen.

Ferner können die hier beschriebenen Vorrichtungen in Schallwänden verwendet werden, auf die durch vorbeifahrende Züge/Autos enorme Windkräfte wirken, die durch die entsprechende Vorrichtung abgegriffen werden können.

Weitere Anwendungsmöglichkeiten sind beispielsweise in Fitnesscenter, um lineare Kräfte bzw. Bewegungen abzugreifen, z.B. kann beim Runterlegen der Hantelbank der Mechanismus durch Einpendeln der Hantel die Gewichtskraft abfangen.

Die vorstehend beschriebenen Ausführungsformen der Offenbarung stellen insbesondere eine lange Lebensdauer der Vorrichtung bzw. des Systems bereit.

Straßen sind vielen Belastungen ausgesetzt: Sie müssen sowohl zunehmenden Verkehrsfrequenzen als auch immer schwereren Lastwagen standhalten - und das bei Hitze, Kälte und Regen. Deshalb sollten integrierbare Systeme darauf ausrichtbar sein. Die hier beschriebenen Ausführungsformen sind für eine enorm hohe Belastbarkeit und damit auch technische Lebensdauer u.a. aus den folgenden Gründen vorteilhaft:

- Neodym-Magnete weisen an sich eine prinzipiell lange Lebensdauer auf, solange sie nicht Rost ausgesetzt sind und die Koerzivitätsgrenze der Magnete nicht überschritten wird. Neodym-Magnete können durch Optimierung gegen Erschütterungen unempfindlich sein und besitzen ein optimiertes Curiertemperatur-Fenster (d.h. volle Magnetisierung bei den maximal erreichbaren Umgebungstemperaturen auf den Straßen).

- Da der direkte Weg von mechanischer Energie in elektrische sehr kurz ist, werden keine speziellen mechanischen Konfigurationen benötigt, was wiederum die Lebenszeit des apparativen magnetischen Aufbaus verlängert.
- Da durch den apparativen magnetischen Aufbau keine mechanische Belastung zustande kommt bzw. sich die Magnete nicht berühren, kann ein reibungsarmes(freies) System bereitgestellt werden, welches die Lebensdauer des Systems wieder um ein Vielfaches erhöht.

Nachfolgend werden die vorstehend genannten Aspekte anhand von Ausführungsbeispielen und der Figuren näher erläutert. Es zeigen:

Fig. 1a zeigt eine perspektivische Ansicht und eine perspektivische Schnittansicht einer Vorrichtung gemäß einer Ausführungsform der Offenbarung,

Fig. 1b zeigt ein Blockdiagramm einer seitliche Schnittansicht der Vorrichtung gemäß Fig. 1a,

Fig. 1c zeigt eine seitliche Schnittansicht der Vorrichtung gemäß Fig. 1a,

Fig. 2a zeigt eine perspektivische Ansicht einer Vorrichtung gemäß einer Ausführungsform der Offenbarung,

Fig. 2b zeigt ein Blockdiagramm einer seitlichen Schnittansicht der Vorrichtung gemäß Fig. 2a,

Fig. 2c zeigt eine seitliche Schnittansicht der Vorrichtung gemäß Fig. 2a,

Fig. 2d zeigt eine seitliche Schnittansicht der Vorrichtung gemäß einer weiteren Ausführungsform der Offenbarung,

Fig. 3 zeigt eine seitliche Schnittansicht einer Vorrichtung gemäß einer Ausführungsform der Offenbarung,

Fig. 4a zeigt eine mögliche Anordnung von Kegelmagneten gemäß einer Ausführungsform der Offenbarung,

Fig. 4b zeigt eine mögliche Anordnung von Kugelmagneten gemäß einer Ausführungsform der Offenbarung,

Fig. 4c zeigt eine mögliche Anordnung von Pyramidenmagneten gemäß einer Ausführungsform der Offenbarung,

Fig. 4d zeigt eine mögliche Anordnung von Rechteckmagneten gemäß einer Ausführungsform der Offenbarung,

Fig. 4e zeigt eine mögliche Anordnung von Würfelmagneten gemäß einer Ausführungsform der Offenbarung,

Fig. 4f zeigt eine mögliche Anordnung von Zylindermagneten gemäß einer Ausführungsform der Offenbarung,

Fig. 5 zeigt eine schematische Skizze einer Verwendung der Vorrichtung gemäß einer Ausführungsform der Offenbarung,

Fig. 6 zeigt einen Simulationsaufbau einer Vorrichtung gemäß einer Ausführungsform der Offenbarung,

Fig. 7a zeigt eine Simulation der Magnetfeldverteilung in einer Vorrichtung gemäß einer Ausführungsform der Offenbarung,

Fig. 7b zeigt eine die Magnetfeldverteilung in einer Vorrichtung gemäß einer Ausführungsform der Offenbarung entlang der Linie A in Fig. 7a,

Fig. 8a zeigt eine Simulation der Magnetfeldverteilung in einer Vorrichtung gemäß einer Ausführungsform der Offenbarung,

Fig. 8b zeigt eine die Magnetfeldverteilung in einer Vorrichtung gemäß einer Ausführungsform der Offenbarung entlang der Linie A in Fig. 8a.

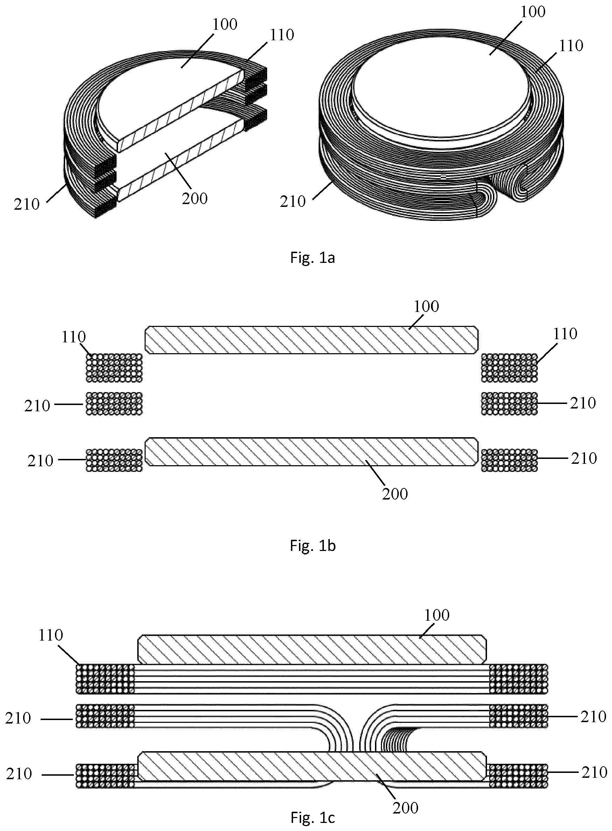

Fig. 1a zeigt eine perspektivische Ansicht und eine perspektivische Schnittansicht einer Vorrichtung gemäß einer Ausführungsform der Offenbarung. Fig. 1b zeigt ein Blockdiagramm einer seitlichen Schnittansicht der Vorrichtung gemäß Fig. 1a und Fig. 1c zeigt eine seitliche Schnittansicht der Vorrichtung gemäß Fig. 1a.

Wie in den Figuren 1a-1c erkennbar ist ein erster Magnet 100 mit einem vorbestimmten Abstand oberhalb eines zweiten Magneten 200 angeordnet. Der erste Magnet 100 ist in Richtung des zweiten Magneten 200 beweglich angeordnet und die jeweils gleichen Pole des ersten Magneten 100 und des zweiten Magneten 200 sind zueinander ausgerichtet.

In einer Ausführungsform ist der zweite Magnet 200 ortsfest verbaut.

Ferner ist eine erste Spule 110 (Ringspule) mit einer vorbestimmten Anzahl an Windungen und einem durch die Windungen gebildeten Innenraum gezeigt. Die erste Spule 110 nimmt den ersten Magneten 100 bei einer Bewegung in Richtung des zweiten Magneten 200 in ihrem Innenraum auf und erzeugt dadurch eine entsprechende Induktionsspannung.

Eine zweite Spule 210 mit einer vorbestimmten Anzahl an Windungen und einem durch die Windungen gebildeten Innenraum ist ebenfalls gezeigt. Die zweite Spule 210 ist unterhalb der ersten Spule 110 angeordnet und ist senkrecht zur ersten Spule 110 ausgerichtet. Die zweite Spule 210 ist zumindest teilweise um den zweiten Magneten 200 herum angeordnet ist und erzeugt bei einer Bewegung des ersten Magneten 100 in Richtung des zweiten Magneten 200 eine Spannung.

Die Oberseite der ersten Spule 110 ist im Wesentlichen auf gleicher Höhe wie die Unterseite des ersten Magneten 100 angeordnet. Die erste Spule 110 weist eine Form auf, die dem ersten Magneten 100 entspricht (hier ringförmig), wobei der Innendurchmesser der ersten Spule 110 größer als der Außendurchmesser des ersten Magneten 100 ist, um den ersten Magneten 100 in dem Innenraum (durch den Innendurchmesser definiert) der ersten Spule 110 aufnehmen zu können, wenn der erste Magnet 100 in Richtung des zweiten Magneten 200 bewegt wird.

Die zweite Spule 210 weist eine Ellipsenform auf. Die zweite Spule 210 ist um den zweiten Magneten 200 angeordnet, sodass sich die Enden (die beiden Hauptscheitel) der ellipsenförmigen zweiten Spule 210 mit einem vorbestimmten Abstand zueinander befinden und die erste und zweite Spule 110, 210 senkrecht zueinander ausgerichtet sind.

Die beiden Hauptscheitelpunkte der zweiten Spule 210 liegen in einer Ebene parallel zum ersten und zweiten Magneten 100, 200.

Einer der Nebenscheitel der zweiten Spule 210 ist dabei oberhalb des zweiten Magneten 200 angeordnet und der andere Nebenscheitel der zweiten Spule 210 ist unterhalb des ersten Nebenscheitels angeordnet, vorzugsweise auf Höhe des zweiten Magneten 200.

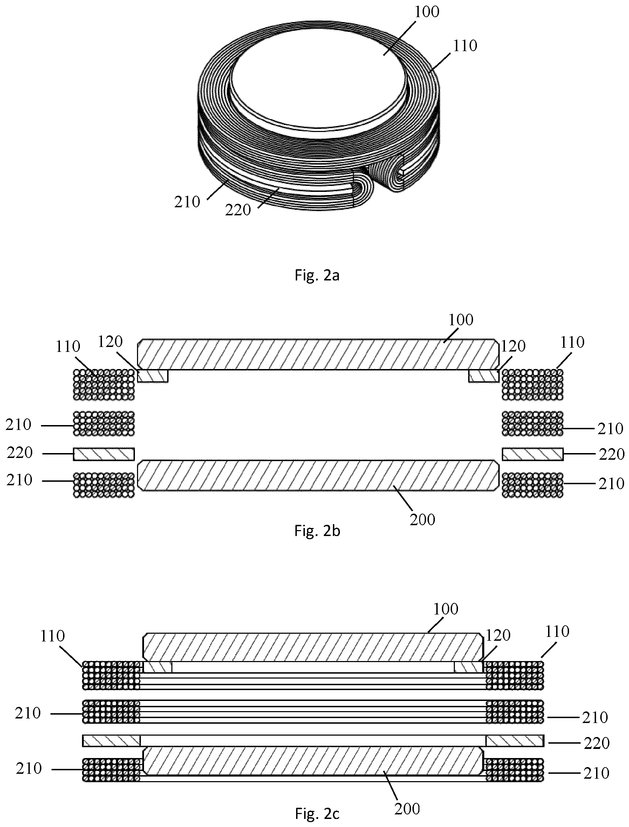

Fig. 2a zeigt eine perspektivische Ansicht einer Vorrichtung gemäß einer Ausführungsform der Offenbarung. Fig. 2b zeigt ein Blockdiagramm einer seitlichen Schnittansicht der Vorrichtung gemäß Fig. 2a und Fig. 2c zeigt eine seitliche Schnittansicht der Vorrichtung gemäß Fig. 2a.

Die Ausführungsform gemäß den Figuren 2a-2c entspricht im Wesentlichen der Ausführungsform gemäß den Figuren 1a-1c. Auf eine erneute Beschreibung der bereits anhand der Figuren 1a-1c beschriebenen Merkmale wird an dieser Stelle verzichtet. Lediglich die zusätzlichen Merkmale der Ausführungsform gemäß den Figuren 2a-2c werden nachfolgend beschrieben.

In den Figuren 2a-2c wird ein erstes Eisenelement 120, vorzugsweise ein erstes Stahlelement 120, und ein zweites Eisenelement 220, vorzugsweise ein zweites Stahlelement 220, gezeigt. Das erste Eisenelement 120 weist eine dem ersten Magneten 100 entsprechende Form auf (hier eine Ringform) und ist unterhalb des ersten Magneten 100 angeordnet. Mit anderen Worten, das erste Eisenelement 120 ist auf der Unterseite des ersten Magneten 100 (die Unterseite entspricht der Seite, die dem zweiten Magneten 200 zugewandt ist) angeordnet und schließt nach außen mit dem ersten Magneten 100 bündig ab.

Das zweite Eisenelement 220 weist eine Form auf, die es dem zweiten Eisenelement 220 erlaubt in dem Innenraum der zweiten Spule 210 (Innenraum des Ellipsenrings) angeordnet zu werden. In dieser Ausführungsform weist das zweite Eisenelement 220 eine Ringform mit einem Spalt auf und ist im Innenraum der ellipsenförmigen zweiten Spule 210 angeordnet, wobei sich das zweite Eisenelement 220 von einem Hauptscheitel zum anderen Hauptscheitel der zweiten Spule 210 erstreckt und sich die zwei Hauptscheitel innerhalb des Spalts des zweiten Eisenelements 220 befinden. Der Außendurchmesser des zweiten Magneten 200 ist kleiner als der Innendurchmesser des zweiten Eisenelements 220.

Das zweite Eisenelement 220 ist oberhalb des zweiten Magneten 200 angeordnet, d.h. die Oberseite des zweiten Magneten 200 (die Oberseite entspricht der Seite, die dem ersten Magneten 100 zugewandt ist) ist unterhalb der Unterseite des zweiten Eisenelements 220 angeordnet.

Die Innen- und Außenseite des zweiten Eisenelements 220 sind zur Innen- und Außenseite der zweiten Spule 210 ausgerichtet. Das zweite Eisenelement 220 ist in dem Innenraum der zweiten Spule 210 im Wesentlichen zentriert angeordnet.

Das erste und zweite Eisenelement 120, 220 sind in zueinander parallelen Ebenen angeordnet.

Das obere Eisenelement 120 hat zwei Funktionen. Die erste Funktion dient der Verringerung der Abstoßungskraft zwischen den Magneten. Auf den oberen dynamischen Magnet wirkt nun nicht nur eine abstoßende Kraft von dem unteren statischen Magneten, sondern zusätzliche eine anziehende der durch das Eisen verursacht wird. Durch ein Kräftegleichgewicht lässt sich nun die resultierende Kraft berechnen. Dadurch wird eine Skalierung von mehreren Modulen im inneren der Platte ermöglicht, um den Wirkungsgrad zu steigern. Außerdem kann man durch die Dicke des Eisens die benötigte Abstoßungskraft frei skalieren.

Die zweite Funktion des inneren Stahlringes dient zur Bündelung und Verdrängung der Feldlinien nach außen zur unteren "Abstoßungsspule". Dadurch lassen sich bemerkbare Spannungen abgreifen.

Der beim unteren statischen Magnet umrundete äußere Stahlring schafft es die Feldlinienverdichtung durch die Abstoßung weiter nach außen zu treiben und zu bündeln, um mit der Spule näher ran zu kommen. Ohne den untern Stahlring würde der physikalische Effekt zwar nicht verloren gehen, aber es würde in der Praxis schwieriger sein jene Magnetfeldänderung abzugreifen.

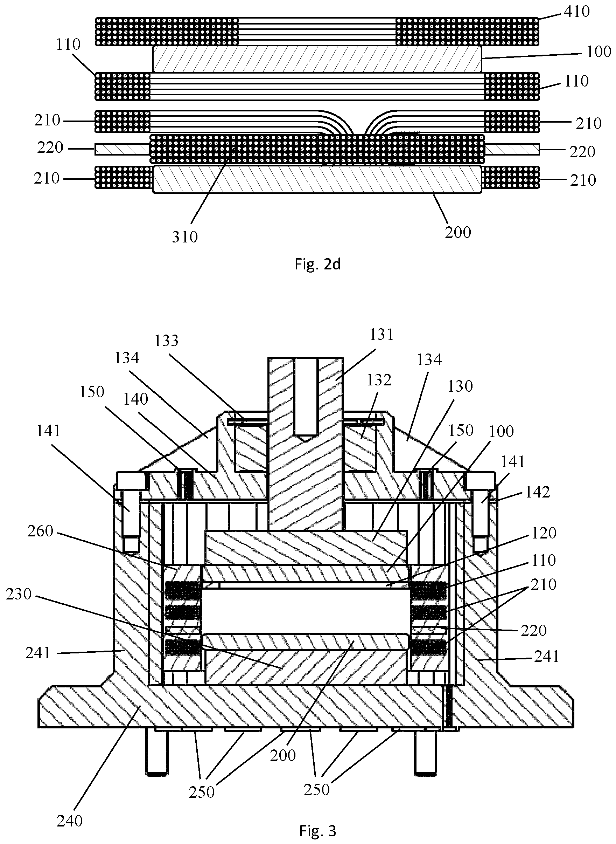

Fig. 2d zeigt eine seitliche Schnittansicht der Vorrichtung gemäß einer weiteren Ausführungsform der Offenbarung. Elemente der in Fig. 2d gezeigten Ausführungsform, die mit den vorhergehenden Ausführungsformen übereinstimmen, sind mit den selben Referenzzeichen versehen und auf eine erneute Beschreibung dieser Elemente wird verzichtet.

Im Vergleich zur Ausführungsform von Fig. 2c weist die Ausführungsform von Fig. 2d eine zusätzliche dritte Spule 310 und eine zusätzliche vierte Spule 410 auf.

Die dritte Spule 310 ist zwischen dem ersten Magneten 100 und dem zweiten Magneten 200 angeordnet und hat einen vorbestimmten Abstand zu dem ersten Magneten 100.

Ferner weist die dritte Spule 310 einen Außendurchmesser auf, der kleiner ist als der Innendurchmesser der ersten Spule 110. Ferner weist die dritte Spule 310 einen Außendurchmesser auf, der im Wesentlichen einem Außendurchmesser des zweiten Magneten 200.

Der Abstand der dritten Spule 310 zu dem zweiten Magneten 200 ist dabei minimal und der Abstand der dritten Spule 310 zu dem ersten Magneten 100 ist maximal gewählt, d.h. der Abstand der dritten Spule 310 zu dem zweiten Magneten 200 ist wesentlich kleiner als der Abstand der dritten Spule 310 zu dem ersten Magneten 100.

Vorzugsweise weist die Vorrichtung lediglich den zweiten Eisenring 220 auf, wenn die Vorrichtung die dritte Spule 310 aufweist. Mit anderen Worten, es ist bevorzugt, dass die Vorrichtung keinen ersten Eisenring 120 aufweist, wenn die dritte Spule 310 vorhanden ist. Allerdings ist die vorliegende Offenbarung nicht auf eine derartige Konfiguration beschränkt und der erste Eisenring 120 kann auch in der Ausführungsform der Fig. 2d vorhanden sein.

In Fig. 2d ist die dritte Spule 310 zumindest teilweise in einer Ebene mit dem zweiten Eisenring 220 angeordnet.

Die Windungen der dritten Spule 310 sind in im Wesentlichen parallelen Ebenen gewickelt und die Windungen der zweiten Spule 210 im Wesentlichen in einer Oberfläche enthalten, die senkrecht zur dritten Spule 310 steht.

Die Verwendung der dritten Spule 310, bietet unter einer gewissen Magnetgeometrieauswahl eine weitere Effizienzsteigerung.

Je nach Dimension der Fläche und Höhe des darauf fahrenden Magneten (erster Magnet 100) ändert die hier gezeigte dritte Spule 310 ihren Mehrwert. Besonders vorteilhaft ist die Verwendung der dritten Spule 310 für Magnetsysteme die Magneten 100, 200 mit großer Höhe haben und somit eine nach unten weit austretender Flussdichte. Dadurch lässt sich ein weiter Weg nach unten wickeln.

In der nachfolgenden Tabelle ist ein prozentualer Vergleich der drei Spulen 110, 210 und 310 im Hinblick auf die jeweilige Energieausbeute dargestellt. Insbesondere sind in der Tabelle die jeweiligen prozentualen Anteile der Spulen an der gesamten Energieausbeute dargestellt. Die Bezeichnung N52 bezeichnet dabei die in diesem Ausführungsbeispiel verwendeten Magneten (Neodym Magneten NdFeB N52). Die vorliegende Offenbarung ist selbstverständlich nicht auf die Verwendung dieser Magneten beschränkt und es können Die in der Tabelle aufgeführten Werte sind bei Systemen mit dritter Spule 310 (ohne vierter Spule 410) und ohne Eisenringe 120, 220 ermittelt worden. Durch den Stahl (je nach Dicke) können sich die Werte in der Tabelle verändern. Dabei verliert die dritte Spule 310 bei zunehmender Dicke des Eisenrings ihren Mehrwert. Bei Verwendung einer dritten Spule 310 und eines ersten Eisenrings 120, ist es somit vorteilhaft die Dicke des ersten Eisenrings 120 möglichst klein zu wählen.

| N52 | 70x40mm | 25x20mm | 150x40mm |
|---|---|---|---|
| Zweite Spule 210 | 12% | 91% | 5% |
| Erste Spule 110 | 77% | 7% | 61% |
| Dritte Spule 310 | 11% | 2% | 34% |

Wie in der Tabelle zu sehen, eignet sich die Verwendung der dritten Spule 310 besonders für sehr große Magnete.

Ferner ist in Fig. 2d eine zusätzliche vierte Spule 410 gezeigt. Die vierte Spule 410 kann zusätzlich oder anstelle der dritten Spule 310 vorhanden sein.

Die vierte Spule 410 weist eine vorbestimmte Anzahl an Windungen auf. Die vierte Spule 410 ist oberhalb des ersten Magneten 100 angeordnet. Mit anderen Worten, die vierte Spule 410 ist auf der dem zweiten Magneten 200 abgewandten Seite des ersten Magneten 100 angeordnet (d.h. der erste Magnet 100 befindet sich zwischen der ersten und der vierten Spule 110, 410).

Die vierte Spule 410 weist einen Außendurchmesser auf, der größer ist als der Außendurchmesser des ersten Magneten 100. Ferner weist die vierte Spule 410 einen Außendurchmesser auf, der im Wesentlichen gleich dem Außendurchmesser der ersten Spule 110 ist.

Wie in Fig. 2d ersichtlich, sind die Windungen der zweiten Spule 210 im Wesentlichen in einer Oberfläche enthalten, die senkrecht zur vierten Spule 410 steht.

Ferner sind die Windungen der vierten Spule 410 in im Wesentlichen parallelen Ebenen gewickelt und die Windungen der vierten Spule 410 sind im Wesentlichen in einer Oberfläche enthalten, die parallel zur dritten Spule 310 steht.

Im Vergleich zur dritten Spule 310, ist der Mehrwert der vierten Spule 410 ähnlich zu dem der dritten Spule 310, mit dem Unterschied, dass bei Verwendung einer Welle (Welle 131 in der nachfolgend beschriebenen Fig. 3) durch die vierte Spule 410 verläuft, um den ersten Magnet 100 nach unten zu bewegen. Dadurch geht bei der vierten Spule 410 im Vergleich zur dritten Spule 310 u.U. etwas abgreifbare Fläche verloren, wo zwar eine Magnetfeldänderung stattfindet, aber kein Kupferdraht platziert werden kann.

Allerdings kann die vierte Spule 410 im Vergleich zur dritten Spule 310 weiter in die Höhe gewickelt werden. Bei der dritten Spule 310 ist dies durch den zweiten Magnet 200 blockiert und lässt somit nur eine gewisse Wickelhöhe für die dritte Spule 310 zu. Bei der vierten Spule 410 ist das nicht der Fall und man kann die vierte Spule 410 weiter als die dritte Spule 310 wickeln.

Somit kann die dritte Spule 310 so gewickelt werden, dass eine maximale abgreifbare Fläche entsteht. D.h. die dritte Spule 310 kann den entsprechenden Kupferdraht im Wesentlichen komplett (jedenfalls soweit technisch möglich) einschließend aufweisen. Mit anderen Worten, der Kupferdraht der dritten Spule 310 füllt den Innenraum der dritten Spule im Wesentlichen komplett aus.

Die Wicklung der dritten Spule 310 im kompletten Innenraum der dritten Spule 310 ist bei der vierten Spule 410, wie vorstehend beschrieben, in gewissen Ausführungsformen nicht möglich, da beispielsweise eine Welle (Welle 131 in der nachfolgend beschriebenen Fig. 3) durch die vierte Spule 410 geführt wird, um den ersten Magneten 100 zu bewegen. Allerdings kann die vierte Spule 410 im Vergleich zur dritten Spule 310 in der Höhe (senkrecht zur Oberfläche, in der die Wicklungen der vierten Spule 410 enthalten sind), wie vorstehend beschrieben, weiter gewickelt werden.

Werden mehrere Vorrichtungen gemäß der vorliegenden Offenbarung in einem System gemäß der vorliegenden Offenbarung verwendet, kann es vorteilhaft sein, eine erste Anzahl an Vorrichtungen mit der ersten und der zweiten Spule 110, 210 und eine zweite Anzahl von Vorrichtungen mit einer ersten, einer zweiten und einer dritten Spule 110, 210, 310 zu verwenden. Insbesondere können die ersten und zweiten Magneten 100, 200 entsprechend ihrer Größe ausgewählt werden (große Magneten für die Verwendung von drei Spulen), um in einem solchen gemischten System die Kosten und die Effizienz zu optimieren.

Fig. 3 zeigt eine seitliche Schnittansicht einer Vorrichtung gemäß einer Ausführungsform der Offenbarung. Die Ausführungsform gemäß Fig. 3 entspricht im Wesentlichen den vorstehend beschriebenen Ausführungsform gemäß den Figuren 1a-1c und 2a-2c. Auf eine erneute Beschreibung der bereits anhand der Figuren 1a-1c und 2a-2c beschriebenen Merkmale wird an dieser Stelle verzichtet. Lediglich die zusätzlichen Merkmale der Ausführungsform gemäß Fig. 3 werden nachfolgend beschrieben.

Fig. 3 zeigt einen ersten Stator 130 und einen zweiten Stator 230. Der erste Stator 130 ist auf einer dem zweiten Magneten 200 abgewandten Seite des ersten Magneten 100 angeordnet. Der zweite Stator 230 ist auf einer dem ersten Magneten 100 abgewandten Seite des zweiten Magneten 200 angeordnet.

Fig. 3 zeigt ferner ein erstes Plattenelement 140 und ein zweites Plattenelement 240. Das erste Plattenelement 140 ist auf einer dem zweiten Magneten 200 abgewandten Seite des ersten Magneten 100 angeordnet. Das zweite Plattenelement 240 ist auf einer dem ersten Magneten 100 abgewandten Seite des zweiten Magneten 200 angeordnet.

Der erste und zweite Stator 130, 230 sind jeweils zwischen dem ersten und zweiten Plattenelement 140, 240 und dem entsprechenden ersten und zweiten Magneten 100, 200 angeordnet.

Das erste Plattenelement 140 ist oberhalb des zweiten Plattenelements 240 mit einem vorbestimmten Abstand angeordnet.

Das zweite Plattenelement 240 weist ein senkrechtes Seitenelement 241 auf, welches sich bis zum ersten Plattenelement (Abdeckung) 140 erstreckt und mit dem ersten Plattenelement 140 einen Raum definiert, in dem der erste und zweite Stator 130, 230, der erste und zweite Magnet 100, 200 und die erste und zweite Spule 110, 210 angeordnet sind.

Das erste Plattenelement 140 ist über mindestens eine Schraubverbindung mit dem senkrechten Seitenelement 241 des zweiten Plattenelements 240 fest verbunden.

Wie in Fig. 3 ersichtlich, erstrecken sich das erste und zweite Plattenelement 140, 240 parallel zueinander. Das Seitenelemente 241 erstreckt sich senkrecht zu dem ersten und zweiten Plattenelement 140, 240. Wie in Fig. 3 ersichtlich, befindet sich oberhalb des Stators 130 eine Welle 131, die wiederum die einwirkende Kraft aufnimmt und so den Stator 130 samt Magneten 100 in Richtung des unteren statischen Magneten 200 bewegt. Die Führung der Welle 131 wird durch die Anbringung einer entsprechenden Lagerung 132 sichergestellt. Ein Sicherungsring 133 hält wiederum das Lager 132 in Position.

Die Welle 131 samt Stator 130 und Magneten 100 weisen im Ausgangszustand einen vorbestimmten Abstand zum unteren Magneten 200 auf. Das obere Plattenelement 140 (Abdeckung) dient zusätzlich als Anschlag bei der Rückführung der Welle 131 nach erfolgter Krafteinwirkung. Unteranderem wird dadurch das auftretende Schwingverhalten nach der Krafteinwirkung verhindert bzw. abrupt gestoppt.

In einer Ausführungsform beträgt der vorbestimmte Abstand 1-20 mm, vorzugsweise 1-10 mm.

Das erste und zweite Plattenelement 140, 240 weisen Luftschlitze 150, 250 auf, die eine Luftkompression verhindert, die durch die translatorische Bewegung der Welle 131 samt Stator 130 und Magnet 100 hervorgerufen wird. An der Unterseite des zweiten Plattenelements 240 und an der Welle 131 sind Befestigungsmittel vorgesehen, die den Einbau der Vorrichtung ermöglichen, z.B. in ein Bodenbelagsystem.

Wie vorstehend beschrieben, weist die Vorrichtung ein Bodenelement (zweites Plattenelement 240) und ein Deckelement (erstes Plattenelement 140 oder auch Deckenelement) auf. Das Deckelement wird über eine entsprechende Schraubverbindung 141 mit dem Bodenelement bzw. mit dem Seitenelement 241 fest verbunden. Zur Abdichtung vor z.B. Feuchtigkeit wird eine Flachdichtung 142 zwischen dem Bodenelement 240 und Deckelement 140 eingebracht.

Über Sechskantzylinderschrauben wird in weiterer Folge die gesamte Vorrichtung (auch Kraftmodul genannt) bei Verwendung in einem Bodenbelagsystem an einer Grundplatte bzw. Bodenkonstruktion (nicht gezeigt) fixiert.

Auf den Stator 130 des oberen Magneten 100 wird eine Welle 131 angebracht, welche wiederum beweglich gelagert ist und so eine translatorische Bewegung in vertikaler Richtung ermöglicht. Die sich bewegende Welle 131 wird über das Lager 132, welches im Deckelement 140 befestigt ist, geführt.

Die Fixierung des Lagers 132 erfolgt über einen Sicherungsring 133.

Zusätzliche rechteckigen Verstrebungen 134 im oberen Bereich des Deckelementes sollen die Lagerung und schlussendlich die Welle 131 zusätzlich stabilisieren und das Deckelement 140 verstärken. Dadurch können Kräfte mit einer nicht vertikalen Ausrichtung über das Gehäuse aufgenommen und entsprechend abgeleitet werden.

Der obere Stator 130 samt Welle 131 dient in Verbindung mit dem Deckelement 140 als Anschlag um ein natürliches Schwingverhalten nach Auslenkung zu unterdrücken (der Stator 130 wird durch das Deckelement 140 abrupt abgestoppt).

Die Luftschlitze 150, 250 im Bodenelement 240 sowie im Deckelelement 140 dienen dazu, die Luftkompression im Inneren der Vorrichtung bei Krafteinwirkung zu vermeiden.

Die erste und zweite Spule 110, 210, der ersten und zweite Magnet 100, 200 und das erste und zweite Eisenelement 120, 220 sind vorzugsweise in Epoxidharz eingebettet. Somit können die Komponenten effektiv geschützt und positioniert werden.

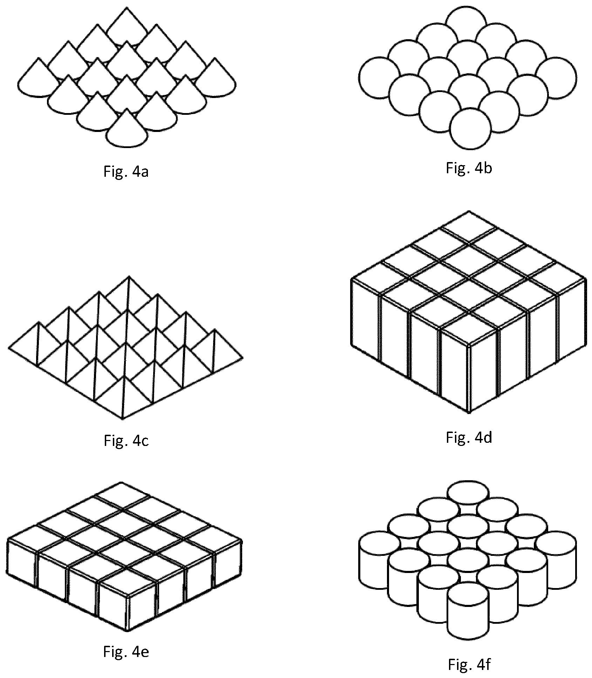

Fig. 4a-4f zeigen verschiedene Anordnungen von Magneten, die jeweils für den ersten und/oder zweiten Magneten 100, 200 verwendet werden können. Mit anderen Worten, der erste und/oder zweite Magnet 100, 200 kann aus einer Anordnung von mehreren Magneten bestehen, wobei die mehreren Magnete wie in den Figuren 4a-4f angeordnet sein können um einen jeweiligen ersten und/oder zweiten Magneten 100, 200 zu bilden.

Insbesondere zeigt Fig. 4a eine mögliche Anordnung von Kegelmagneten gemäß einer Ausführungsform der Offenbarung. Fig. 4b zeigt eine mögliche Anordnung von Kugelmagneten gemäß einer Ausführungsform der Offenbarung. Fig. 4c zeigt eine mögliche Anordnung von Pyramidenmagneten gemäß einer Ausführungsform der Offenbarung. Fig. 4d zeigt eine mögliche Anordnung von Rechteckmagneten gemäß einer Ausführungsform der Offenbarung. Fig. 4e zeigt eine mögliche Anordnung von Würfelmagneten gemäß einer Ausführungsform der Offenbarung. Fig. 4f zeigt eine mögliche Anordnung von Zylindermagneten gemäß einer Ausführungsform der Offenbarung.

Die Verwendung einer der vorstehend genannten Anordnungen von mehreren Magneten zum Aufbau des ersten und/oder zweiten Magneten 100, 200 kann im Gegensatz zur Verwendung eines einzelnen Magneten 100, 200 u.a. die damit verbundenen Kosten senken.

Bei Verwendung eines einzelnen Magneten, wird eine Spule mit den Kosten y um einen einzelnen Magneten mit den Kosten z und der Fläche x gewickelt. Wird nun beispielsweise eine Spule um vier zusammengesteckte Magnete gewickelt, beträgt der Magnetpreis 4z durch die 4-fache Fläche 4x. Der Spulenpreis jedoch beträgt nicht das 4-fache, sondern nur 2y, da sich die optimale Wicklungsanzahl nicht vervierfacht. Durch einsetzten in die weiter unten beschriebene Formel, wird außerdem durch 4x die 16-Fache Leistung erzielt. Dadurch, dass jeder Magnet mit Norden nach oben gerichtet ist, herrscht eine Abstoßungskraft zwischen den einzelnen Magneten, die die Lebensdauer der Magnete verkürzt.

Da mit Kugelmagneten der gleiche Effekt wie bei Würfelmagneten erzielt werden kann (siehe unten), aber ein 10 mm Durchmesser eines Kugelmagneten eine Masse von 3,8 Gramm und ein Würfelmagnet eine Masse von 7,6 Gramm hat und somit schlussendlich weniger Kilogramm Neodymium benötigt wird und somit weniger Kosten für das System anfallen, ist bei Zusammenstellung der Magneten die Verwendung von Kugelmagneten vorteilhaft.

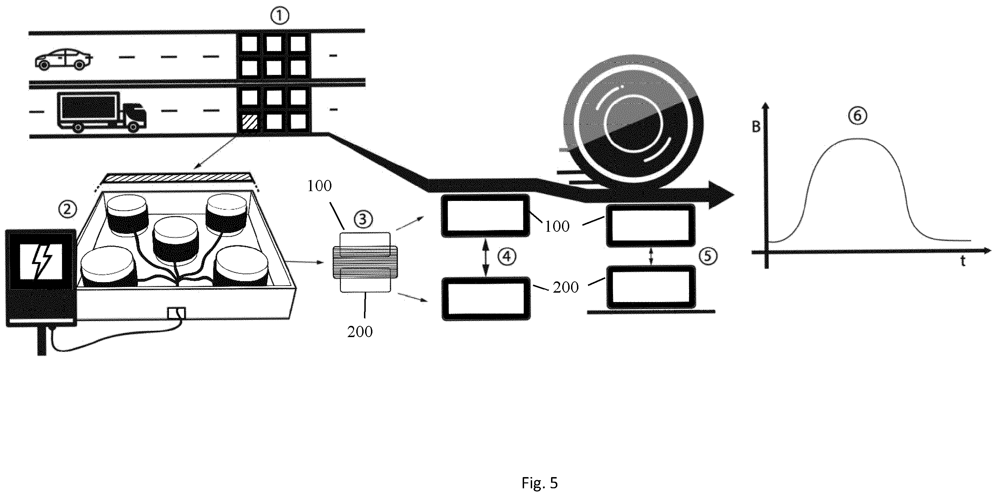

Nachfolgend werden die Funktion und die Verwendung der vorstehend beschriebenen Vorrichtung näher beschrieben. Fig. 5 zeigt eine schematische Skizze einer Funktionsweise und Verwendung der Vorrichtung gemäß einer Ausführungsform der Offenbarung.

Das Grundprinzip beruht auf der Umwandlung von mechanischer Energie in Induktionsspannung. Fig. 5 erläutert das Grundprinzip anhand der Verwendung in einem Bodenbelagsystem (hier eine Straße). Wie in Fig. 5 unter Ziffer (1) gezeigt, wird die senkrechte Gewichtskraft, sowie die senkrechte Bewegungskraft (z.B. die Masse eines Autos und deren Erdanziehung) genutzt, um mechanische Energie in elektrische Energie umzuwandeln.

Unter Ziffer (2) zeigt Fig. 5 eine beispielhafte Anordnung von mehreren wie vorstehend beschriebenen Vorrichtungen, die in einer Wanne (hier symmetrisch) angeordnet sind, um Drehmomente zu kompensieren. In dieser Ausführungsform sind vier Vorrichtungen an den Ecken eines Quadrats angeordnet uns eine Vorrichtung ist zentriert in dem durch die vier Vorrichtungen gebildeten Quadrat angeordnet. Dies ist allerdings lediglich eine von vielen Möglichkeiten, die Vorrichtung(en) anzuordnen, und soll die vorliegende Offenbarung nicht darauf beschränken.

Unter den Ziffern (3-6) wird die Funktionsweise näher skizziert. Durch den hier beschriebenen apparativen Aufbau wird durch das Gewicht der darüberfahrenden Fahrzeuge eine Bewegung der Magnete 100, 200 zueinander verursacht, die wiederum zu einer Änderung der Magnetfelder führen. Durch die eintretende Ladungstrennung der starken Permanentmagnete 100, 200 werden die Ladungen in der umschließenden Drahtspule bewegt und so eine Spannung induziert, die einen Stromfluss durch einen Verbraucher erzeugt (Induktionsspannung). Wobei in Fig. 5 die "Abstoßungsspule" (zweite Spule 210) nicht ersichtlich ist.

Das Abgreifen der durch die vorstehend beschriebenen Induktionsspannungen bzw. Induktionsströmen findet in Form von Zwischenspeicherung, beispielsweise durch Kondensatoren statt. Die Induktionsströme können dementsprechend durch eine Brückenschaltung gleichgerichtet werden.

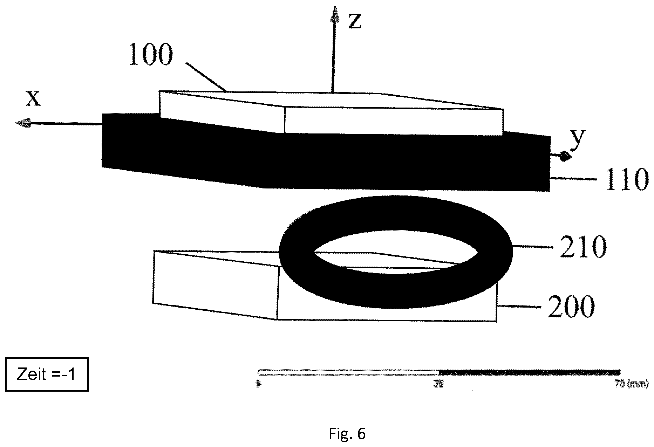

Fig. 6 zeigt einen Simulationsaufbau einer Vorrichtung gemäß einer Ausführungsform der Offenbarung. Fig. 6 zeigt die zweite Spule 210 ("Abstoßungsspule") sowie die erste Spule 110 ("Induktionsspule") um einen jeweiligen Quadermagneten (erster und zweiter Magnet 100, 200).

Das 2-Spulensystem erlaubt es durch die vorstehend beschriebene spezielle Anordnung eine Magnetfeldänderung in horizontaler sowie vertikaler Richtung abzugreifen. Dadurch kann der Energieverlust signifikant minimiert werden. Wobei die Geometrie der ersten und zweiten Spule 110, 210 und Magnete 100, 200 hier frei gewählt wurde, um das Prinzip allgemein zu erläutern.

Durch die Abstoßung der Magnete 100, 200 kann eine relativ hohe Spannung induziert werden. Die Abstoßungsspule 210 stellt im Versuchsaufbau die untere Spule 210 des abstoßenden Magnete 200 dar. Nachdem die erste Spule 110 dem Induktionsspannungsprinzip folgt, wird in den hier beschriebenen Ausführungsformen zusätzlich das hier dargestellte Funktionsprinzip der Abstoßungsspule 210 verwendet.

Durch die Dynamik der Veränderung der Magnetposition verändert sich in weiterer Folge die Ausbreitung des Magnetfelds. Die Feldlinien werden dadurch dichter und das gesamte Magnetfeld in weiterer Folge nach außen gedrückt. Die nach außen gedrückten Feldlinien erlauben dadurch eine Erweiterung des 3-dimensionalen Raums, der durch Spulen abgreifbar wird.

Bezugnehmend auf die Induktionsspannungsgleichung bedeutet das nicht nur eine signifikante Veränderung des Magnetfeldes und der Zeit, sondern auch eine signifikante Vergrößerung der durch die Spulen abgreifbaren Flächen. Das wiederum hat zur Folge, dass durch die Abstoßung der Magnetpole nicht nur die Ausgangsposition erreicht wird, sondern auch zusätzliche Energie frei wird, die abgegriffen werden kann.

Die zusätzliche Stahlringkonfiguration erlaubt es die Magnete nur auf die dementsprechend benötigte Abstoßung auszulegen.

In *https://www.supermagnete.at/scheibenmagnete-neodym/scheibenmagnet-45mm-30mm_S-45-30-N* ist die Anziehungskraft zweier Neodym 45 mit Ø 45 mm und 30mm Höhe in Abhängigkeit von der Distanz gezeigt. Die Abstoßungskraft gibt ungefähr 90% der Anziehungskraft wieder. Dadurch erlaubt das System, bei geringeren Abständen, eine erhöhte Abstoßungskraft. Das bedeutet wiederum, dass bis zu einer gewissen Grenze der Gewichtskraft durch die Abstoßungsspule 210 trotzdem noch Leistung generiert wird und dadurch keine Energie bei größeren Massen verloren geht.

Ferner wird das erste Plattenelement 140 durch die Verwendung des ersten und zweiten Magneten 100, 200 in eine Ausgangslage zurückgebracht ohne die Verwendung eines mechanischen Mechanismus, wie z.B. einer Feder. Die wiederum benötigte Energie, sollte im besten Fall die Hälfte der erreichten Energie sein. Die vorliegenden Ausführungsformen erlauben es durch Magnetfeldänderungen zusätzlich Energie beim Zurückführen des ersten Plattenelements 140 zu generieren. Der einzige Unterschied zu nach unten fahrender Bewegung, ist das negative Vorzeichen in der Spannungskurve. Das bedeutet, solange man die Magnete nicht beschädigt, lässt sich im Vergleich zu jedem anderen Energiewandler mehr Energie umwandeln.

Die Formel zur Berechnung der schlussendlichen Energie pro Vorrichtung ergibt sich aus:

$$U = \left( \frac{\left( \frac{\left( N \times \frac{\Delta B \times A}{\Delta t} \right)^2}{R} \right) * t}{4} \right) * 2,$$

wobei N die Anzahl der Windungen und B*A die Magnetfeldänderung abhängig von der Fläche ist, wobei hier immer für den Flussdichtenwert integriert wurde, da es bei der Flussdichte in einer umschlossenen Windung keine Lokalitäten gibt. Ferner gibt t die Zeit des nach unten bewegenden Magneten (erster Magnet 100) und R den Widerstandswert der Windungen in Ohm an. Der ganze Wert wird durch 4 geteilt, da mit Verbraucher nur mehr ¼ übrigbleibt. Der ganze Wert wird mit 2 multipliziert, da es den Weg nach unten und den Weg nach oben gibt.

In einer Ausführungsform kann das System auch so ausgelegt werden, dass der Weg nach unten bzw. der nach oben schneller/langsamer stattfindet.

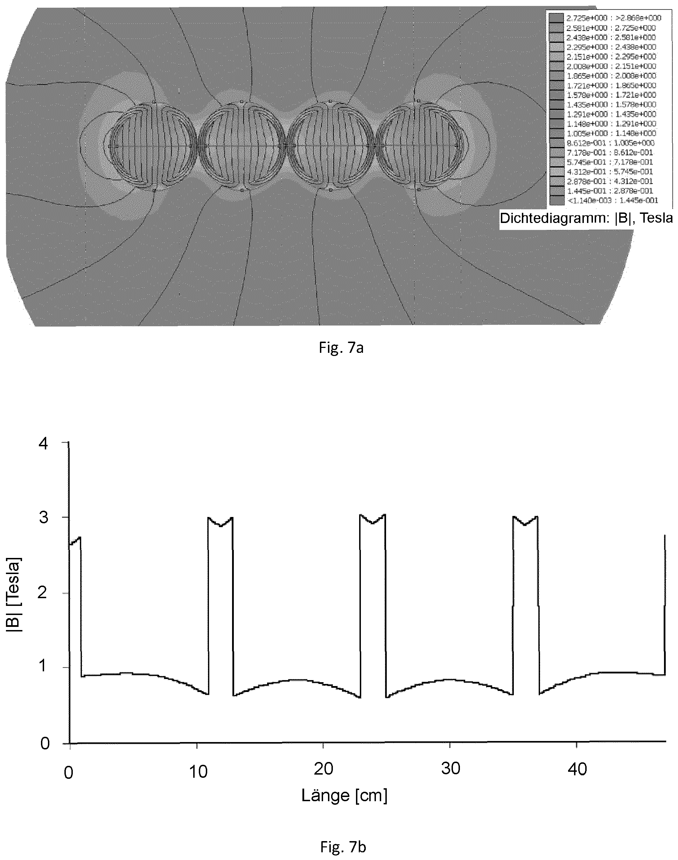

Fig. 7a zeigt eine einfache 2d-Simulation einer Magnetkugelzusammenstellung mit einer Eisenummantelung (N55-90° magnetisiert). Fig. 7b zeigt den Integrationsfaden (Linie A) durch die Kugelmagneten.

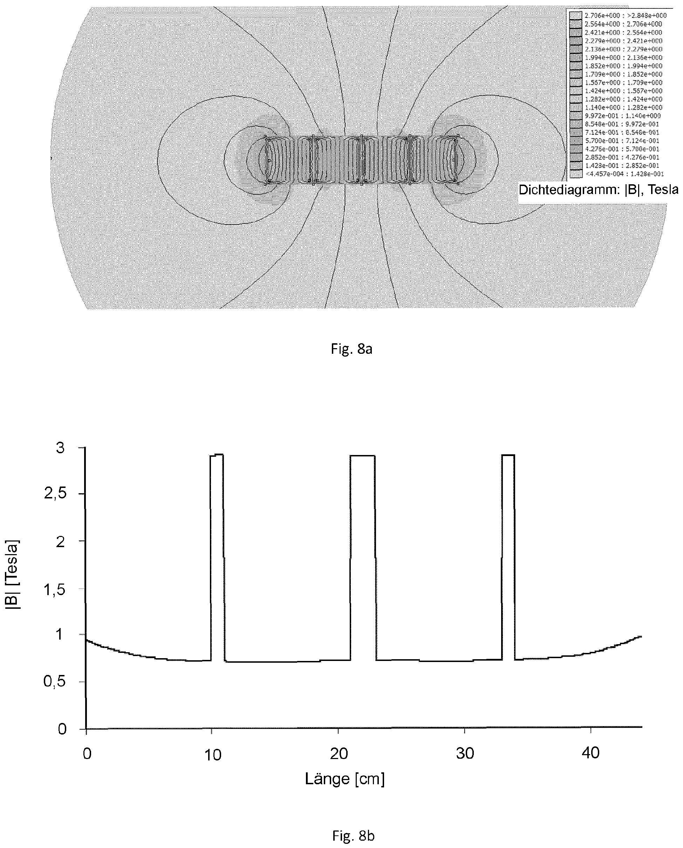

Fig. 8a zeigt eine einfache 2d-Simulation einer Magnetwürfelzusammenstellung mit einer Eisenummantelung (N55-90° magnetisiert). Fig. 8b zeigt den Integrationsfaden (Linie A) durch die Würfelmagneten. Die Kugelmagnete wurden beispielhaft verwendet, um zu erläutern, wieviel Flussdichte man erreichen kann.

Aus den Simulationen lässt sich eine mögliche Magnetfeldänderung von 0,9 Tesla ablesen. Da in der Formel nicht das Volumen, sondern die Fläche eine Rolle spielt, ist es umso besser desto kleiner der Punkt der Horizontalen ist. Da Delta B (Magnetfeldänderung) dadurch erhöht wird.

Nimmt man folgende Werte für die Induktionsspule: A=0,0153m^2, B=0,45 Tesla (hier nicht 0,9 Tesla wie in der obigen Simulation dargestellt, da bei einem 70 mm Durchmesser, der Magnet eine Fläche von 140 mm nehmen wird, um möglichst optimal zu wickeln, bei 1 cm weg nach unten. Nach Integration erhält man damit 0,45 Tesla statt 0,9 Tesla. Die Zeit t=0,0714 s errechnet sich aus einem Kräftegleichgewicht von der Magnetabstoßung und der Gegenkraft durch der Lenz'schen Regel.

Der freie Fall für 1 cm ohne Reibung ist wie folgt definiert: 0,0345 s. Durch eine Gegenkraft des Magneten erhält man die integrierten 0,06 s für 1 cm Weg und durch die Abbremsung des entgegenwirkenden Magnetfeldes, verursacht durch den Strom, schlussendlich eine Zeitkonstante von 0,0714 s.

Ferner werden N=4000 Wicklungen genommen, da dies mit einem 0,3 mm Draht bei einer Fläche von 140 mm das Optimum wäre. Daraus ergibt sich auch ein Widerstandswert von 316 Ohm.

Energie Induktionsspule Theorie: 5,26 Joule mit Verbraucher und 21,06 Joule ohne Verbraucher.

Die gleiche Berechnung findet für die Abstoßungsspule mit folgenden Werten statt:
B=2,5 T (wobei 2,5 T ein hoher Wert ist, jedoch nicht unrealistisch), A=0,00125 m^2, t=0,005 s, N=555, R=71,284 Ohm. Der Unterschied liegt hier in der Magnetfeldänderung. Da die 2,5 Tesla Änderung die kompletten Windungen umschließen und diese Magnetfeldänderung einem anderen physikalischen Prinzip folgen, müssen wir hier nicht integrieren.

Die Abstoßungsspule ergibt in der Theorie mit Verbraucher: 4,2 Joule und 16,8 Joule ohne Verbraucher.

Die Berechnung kommt somit auf 48,09 Joule pro Modul ohne Verbraucher und Leistungselektronik (also Abstoßungs- und Induktionsspule). Mit Verbraucher und Leistungselektronik kommt man auf 12 Joule pro Modul (Vorrichtung).

Da die vorliegenden Ausführungsformen weitgehend unabhängig von mechanischen Leistungsträgern funktioniert (z.B. Spindel für Elektro-Dynamo), kann die Zeitkonstante sehr klein gehalten werden. Das bedeutet, dass man durch diesen Mechanismus im Vergleich zu anderen Systemen bei gleicher Energie, also gleicher Masse, gleicher Beschleunigung und gleichem Weg, mehr Leistung generieren kann, da die Zeitkonstante nicht stark beeinflusst wird.

Da der erste Magnet 100 linear durch die erste Spule 110 fährt, lässt sich mehr Fläche abgreifen, wie bei einem Dynamo. Für die gleichen Kosten im Vergleich zu einem solchen dynamobasierten System, lassen sich ca. 32 Module (Vorrichtungen) einbauen. Dadurch wird mehr als das 60-fache an Energie erreicht. Um die Lebensdauer zu erhöhen und den Mechanismus weitgehend wartungsfrei zu machen, können die vorliegenden Ausführungsformen vorzugsweise auf 74 Joule, also das 15-fache von Dynamo basierten Systeme, ausgelegt werden.

Auch wenn die vorliegende Offenbarung hauptsächlich anhand von Bodenbelagsystemen, insbesondere Straßen, erläutert wurde, ist die Verwendung der hier beschriebenen Vorrichtungen nicht auf diese Anwendung beschränkt. Ein Fachmann auf dem Gebiet wird verstehen, dass die vorstehend beschriebenen Vorrichtungen in verschiedenen anderen Systemen zum "energy harvesting" verwendet werden können, insbesondere in Systemen mit linearen Bewegungen. Nicht abschließende Beispiele sind u.a. Schallwände bei Autobahn, Türklinken, usw.

Obwohl die Offenbarung mittels der Figuren und der zugehörigen Beschreibung dargestellt und detailliert beschrieben ist, sind diese Darstellung und diese detaillierte Beschreibung illustrativ und beispielhaft zu verstehen und nicht als die Offenbarung einschränkend. Es versteht sich, dass Fachleute Änderungen und Abwandlungen machen können, ohne den Umfang der folgenden Ansprüche zu verlassen. Insbesondere umfasst die Offenbarung ebenfalls Ausführungsformen mit jeglicher Kombination von Merkmalen, die vorstehend zu verschiedenen Aspekten und/oder Ausführungsformen genannt oder gezeigt sind.

Die Offenbarung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

**Patentansprüche**

1. Vorrichtung zur Umwandlung von mechanischer Energie in elektrische Energie für ein System, vorzugsweise ein Bodenbelagsystem, wobei die Vorrichtung aufweist:

einen ersten Magneten (100) und einen zweiten Magneten (200), wobei der erste Magnet (100) von dem zweiten Magneten (200) mit einem vorbestimmten Abstand und in Richtung des zweiten Magneten (200) beweglich angeordnet ist und wobei die jeweils gleichen Pole des ersten Magneten (100) und des zweiten Magneten (200) zueinander ausgerichtet sind;

eine erste Spule (110) mit einer vorbestimmten Anzahl an Windungen und einem durch die Windungen gebildeten Innenraum, wobei die Windungen der ersten Spule (110) in im Wesentlichen parallelen Ebenen gewickelt sind, wobei die erste Spule (110) den ersten Magneten (100) bei einer Bewegung in Richtung des zweiten Magneten (200) in ihrem Innenraum aufnimmt und eine entsprechende Induktionsspannung erzeugt;

eine zweite Spule (210) mit einer vorbestimmten Anzahl an Windungen und einem durch die Windungen gebildeten Innenraum, wobei die Windungen der zweiten Spule (120) im Wesentlichen in einer Oberfläche enthalten sind, die senkrecht zur ersten Spule (110) steht, wobei die zweite Spule (210) mit einem vorbestimmten Abstand in Richtung des zweiten Magneten (200) von der ersten Spule (110) angeordnet ist, wobei die zweite Spule (210) zumindest teilweise um den zweiten Magneten (200) herum angeordnet ist und bei einer Bewegung des ersten Magneten (100) in Richtung des zweiten Magneten (200) eine Spannung erzeugt; und

eine dritte Spule (310) mit einer vorbestimmten Anzahl an Windungen, wobei die dritte Spule (310) zwischen dem ersten Magneten (100) und dem zweiten Magneten (200) angeordnet ist und einen vorbestimmten Abstand zu dem ersten Magneten (100) aufweist.

2. Vorrichtung nach Anspruch 1, ferner aufweisend einen ersten Stator (130), der auf einer dem zweiten Magneten (200) abgewandten Seite des ersten Magneten (100) angeordnet ist und einen zweiten Stator (230), der auf einer dem ersten Magneten (100) abgewandten Seite des zweiten Magneten (200) angeordnet ist.

3. Vorrichtung nach Anspruch 1 oder 2, wobei der erste und/oder der zweite Magnet (100, 200) eine zylindrische, rechteckige, würfelige, kegelige, kugelige, oder pyramidenförmige Form aufweist.

4. Vorrichtung nach einem der Ansprüche 1 bis 3, ferner aufweisend:

ein erstes Eisenelement (120), vorzugsweise ein erstes Stahlelement (120), das auf der dem zweiten Magneten (200) zugewandten Seite des ersten Magneten (100) angeordnet ist; und

ein zweites Eisenelement (220), vorzugsweise ein zweites Stahlelement (220), das in dem Innenraum der zweiten Spule (210) angeordnet ist.

5. Vorrichtung nach Anspruch 4, wobei die erste Spule (110) den ersten Magneten (100) und das erste Eisenelement (120) bei einer Bewegung in Richtung des zweiten Magneten (200) in ihrem Innenraum aufnimmt, wobei das erste Eisenelement (120) vorzugsweise mit dem Rand des ersten Magneten (100) bündig abschließt.

6. Vorrichtung nach Anspruch 4 oder 5, wobei das erste Eisenelement (120) eine Ringform aufweist und/oder wobei das zweite Eisenelement (220) eine Ringform mit einem Spalt aufweist.

7. Vorrichtung nach einem der Ansprüche 1 bis 6, wobei der erste und zweite Magnet (100, 200), vorzugsweise ausschließlich, durch die gegenseitige Abstoßung ohne äußere Krafteinwirkung in einer Ausgangslage, die dem vorbestimmten Abstand entspricht, zueinander ausgerichtet sind.

8. Vorrichtung nach Anspruch 7, wobei der erste und zweite Magnet (100, 200) eingerichtet sind, bei einer äußeren Krafteinwirkung den ersten Magneten (100) in Richtung des zweiten Magneten (200) zu bewegen.

9. Vorrichtung nach Anspruch 7 oder 8, wobei der erste und zweite Magnet (100, 200) eingerichtet sind, nach einer äußeren Krafteinwirkung, vorzugsweise ausschließlich, durch die gegenseitige Abstoßung in die Ausgangslage zurückzukehren.

10. Vorrichtung nach einem der Ansprüche 1 bis 9, ferner aufweisend ein erstes Plattenelement (140), das auf einer dem zweiten Magneten (200) abgewandten Seite des ersten Magneten (100) angeordnet ist und ein zweites Plattenelement (240), das auf einer dem ersten Magneten (100) abgewandten Seite des zweiten Magneten (200) angeordnet ist, wobei der erste und zweite Stator (130, 230) vorzugsweise jeweils zwischen dem ersten und zweiten Plattenelement (140, 240) und dem entsprechenden ersten und zweiten Magneten (100, 200) angeordnet sind und wobei ferner vorzugsweise das erste Plattenelement (140) von dem zweiten Plattenelement (240) mit einem vorbestimmten Abstand angeordnet ist.

11. Vorrichtung nach Anspruch 10, wobei der erste und zweite Stator (130, 230), der erste und zweite Magnet (100, 200) und die erste und zweite Spule (110, 210) in einem durch das erste und zweite Plattenelement (140, 240) gebildeten Raum angeordnet sind.

12. Vorrichtung nach Anspruch 11, wobei das erste und/oder zweite Plattenelement (140, 240) mindestens einen Luftschlitz (250) zur Verhinderung von Luftkompression in dem durch das erste und zweite Plattenelement (140, 240) gebildeten Raum aufweist.

13. Vorrichtung nach einem der Ansprüche 1 bis 12, ferner aufweisend:
eine vierte Spule (410) mit einer vorbestimmten Anzahl an Windungen, wobei die vierte Spule (410) auf der dem zweiten Magneten (200) abgewandten Seite des ersten Magneten (100) angeordnet ist.

14. System, vorzugsweise ein Bodenbelagsystem, zur Umwandlung von mechanischer Energie in elektrische Energie mit mindestens einer Vorrichtung nach einem der Ansprüche 1 bis 9.

15. System nach Anspruch 14, wobei mehrere Vorrichtungen nach einem der Ansprüche 1 bis 9 in einem Raum angeordnet sind, der durch mindestens ein Seitenelement, ein Bodenelement und ein Deckenelement gebildet wird, wobei die mehreren Vorrichtungen vorzugsweise symmetrisch in dem Raum angeordnet sind und wobei besonders bevorzugt eine erste Vorrichtung zentriert in dem Raum angeordnet ist und weitere Vorrichtungen symmetrisch um die erste Vorrichtung in dem Raum angeordnet sind.


**Claims**

1. A device for converting mechanical energy into electric energy for a system, preferably a flooring system, wherein the device comprises:

   a first magnet (100) and a second magnet (200), wherein the first magnet (100) is arranged at a predetermined distance from the second magnet (200) and in a manner movable in the direction of the second magnet (200), and wherein the same poles of the first magnet (100) and the second magnet (200) are aligned with each other;
   a first coil (110) having a predetermined number of windings and an inner space formed by the windings, wherein the windings of the first coil (110) are wound in substantially parallel planes, wherein the first coil (110) receives the first magnet (100) in its inner space during a movement in the direction of the second magnet (200) and generates a corresponding induction voltage;
   a second coil (210) having a predetermined number of windings and an inner space formed by the windings, wherein the windings of the second coil (120) are contained substantially in a surface being perpendicular with respect to the first coil (110), wherein the second coil (210) is arranged at a predetermined distance from the first coil (110) in the direction of the second magnet (200), wherein the second coil (210) is arranged at least partially around the second magnet (200) and generates a voltage when the first magnet (100) moves in the direction of the second magnet (200); and
   a third coil (310) having a predetermined number of windings, wherein the third coil (310) is arranged between the first magnet (100) and the second magnet (200) and has a predetermined distance from the first magnet (100).

2. The device according to claim 1, further comprising a first stator (130) arranged on a side of the first magnet (100) facing away from the second magnet (200) and a second stator (230) arranged on a side of the second magnet (200) facing away from the first magnet (100).

3. The device according to claim 1 or 2, wherein the first and/or the second magnet (100, 200) has a cylindrical, rectangular, cubic, conical, spherical, or pyramidal shape.

4. The device according to any one of claims 1 to 3, further comprising:

   a first iron element (120), preferably a first steel element (120), which is arranged on the side of the first magnet (100) facing the second magnet (200); and
   a second iron element (220), preferably a second steel element (220), which is arranged in the inner space of the second coil (210).

5. The device according to claim 4, wherein the first coil (110) receives the first magnet (100) and the first iron element (120) in its inner space during a movement in the direction of the second magnet (200), wherein the first iron element (120) is preferably flush with the edge of the first magnet (100).

6. The device according to claim 4 or 5, wherein the first iron element (120) has a ring shape and/or wherein the second iron element (220) has a ring shape with a gap.

7. The device according to any one of claims 1 to 6, wherein the first and second magnets (100, 200) are aligned with each other in an initial position corresponding to the predetermined distance, preferably exclusively, due to the mutual repulsion without an external force being applied.

8. The device according to claim 7, wherein the first and second magnets (100, 200) are adapted to move the first magnet (100) in the direction of the second magnet (200) when an external force is applied.

9. The device according to claim 7 or 8, wherein the first and second magnets (100, 200) are adapted to return to the initial position after an external force has been applied, preferably exclusively, due to the mutual repulsion.

10. The device according to any one of claims 1 to 9, further comprising a first plate element (140) arranged on a side of the first magnet (100) facing away from the second magnet (200) and a second plate element (240) arranged on a side of the second magnet (200) facing away from the first magnet (100), wherein the first and second stators (130, 230) are preferably each arranged between the first and second plate elements (140, 240) and the corresponding first and second magnets (100, 200) and wherein further preferably the first plate element (140) is arranged at a predetermined distance from the second plate element (240).

11. The device according to claim 10, wherein the first and second stators (130, 230), the first and second magnets (100, 200) and the first and second coils (110, 210) are arranged in a space formed by the first and second plate elements (140, 240).

12. The device according to claim 11, wherein the first and/or second plate element (140, 240) comprises at least one air slot (250) for preventing air compression in the space formed by the first and second plate elements (140, 240).

13. The device according to any one of claims 1 to 12, further comprising:
a fourth coil (410) having a predetermined number of windings, wherein the fourth coil (410) is arranged on the side of the first magnet (100) facing away from the second magnet (200).

14. A system, preferably a flooring system, for converting mechanical energy into electric energy, comprising at least one device according to any one of claims 1 to 9.

15. The system according to claim 14, wherein a plurality of devices according to any one of claims 1 to 9 are arranged in a space which is formed by at least one side element, a floor element and a cover element, wherein the plurality of devices are preferably arranged symmetrically in the space and wherein particularly preferably a first device is arranged centered in the space and further devices are arranged symmetrically around the first device in the space.

**Revendications**

1. Dispositif de conversion d'énergie mécanique en énergie électrique pour un système, de préférence un système de revêtement de sol, ledit dispositif comprenant :

un premier aimant (100) et un deuxième aimant (200), le premier aimant (100) étant disposé à un espacement prédéterminé du deuxième aimant (200) et de manière mobile en direction du deuxième aimant (200), et où les pôles identiques respectifs du premier aimant (100) et du deuxième aimant (200) sont alignés l'un par rapport à l'autre ;
une première bobine (110) avec un nombre prédéterminé de spires et un espace intérieur formé par les spires, les spires de la première bobine (110) étant enroulées sur des plans sensiblement parallèles, la première bobine (110) recevant le premier aimant (100) dans son espace intérieur lors d'un mouvement en direction du deuxième aimant (200) et générant une tension d'induction correspondante ;
une deuxième bobine (210) ayant un nombre prédéterminé de spires et un espace intérieur formé par les spires, les spires de la deuxième bobine (120) étant sensiblement contenues dans une surface perpendiculaire à la première bobine (110), la deuxième bobine (210) étant disposée à un espacement prédéterminé de la première bobine (110) dans la direction du deuxième aimant (200), la deuxième bobine (210) étant disposée au moins en partie autour du deuxième aimant (200) et générant une tension lors d'un mouvement du premier aimant (100) en direction du deuxième aimant (200) ; et

une troisième bobine (310) ayant un nombre prédéterminé de spires, la troisième bobine (310) étant disposée entre le premier aimant (100) et le deuxième aimant (200) et étant distante du premier aimant (100) d'un espacement prédéterminé.

2. Dispositif selon la revendication 1, comprenant en outre un premier stator (130) disposé sur une face du premier aimant (100) distante du deuxième aimant (200), et un deuxième stator (230) disposé sur une face du deuxième aimant (200) distante du premier aimant (100).

3. Dispositif selon la revendication 1 ou la revendication 2, où le premier et/ou le deuxième aimant (100, 200) présentent une forme cylindrique, rectangulaire, cubique, conique, sphérique, ou pyramidale.

4. Dispositif selon l'une des revendications 1 à 3, comprenant en outre :

un premier élément ferreux (120), de préférence un premier élément en acier (120), disposé sur la face du premier aimant (100) opposée au deuxième aimant (200) ; et
un deuxième élément ferreux (220), de préférence un deuxième élément en acier (220), disposé à l'intérieur de la deuxième bobine (210).

5. Dispositif selon la revendication 4, où la première bobine (110) reçoit le premier aimant (100) et le premier élément ferreux (120) dans son espace intérieur lors d'un mouvement en direction du deuxième aimant (200), le premier élément ferreux (120) affleurant de préférence le bord du premier aimant (100).

6. Dispositif selon la revendication 4 ou 5, où le premier élément ferreux (120) présente une forme annulaire et/ou où le deuxième élément ferreux (220) présente une forme annulaire avec une fente.

7. Dispositif selon l'une des revendications 1 à 6, où le premier et le deuxième aimants (100, 200) sont alignés l'un par rapport à l'autre, de préférence de manière exclusive par répulsion mutuelle sans application de force extérieure, dans une position initiale correspondant à l'espacement prédéterminé.

8. Dispositif selon la revendication 7, où le premier et le deuxième aimant (100, 200) sont prévus pour déplacer le premier aimant (100) en direction du deuxième aimant (200) par application d'une force extérieure.

9. Dispositif selon la revendication 7 ou la revendication 8, où le premier et le deuxième aimant (100, 200) sont prévus pour revenir en position initiale après application d'une force extérieure, de préférence de manière exclusive par répulsion mutuelle.

10. Dispositif selon l'une des revendications 1 à 9, comprenant en outre un premier élément en plaque (140) disposé sur une face du premier aimant (100) distante du deuxième aimant (200), et un deuxième élément en plaque (240) disposé sur une face du deuxième aimant (200) distante du premier aimant (100), où le premier et le deuxième stators (130, 230) sont de préférence disposés respectivement entre le premier et le deuxième éléments en plaque (140, 240) et le premier et le deuxième aimants (100, 200) correspondants, et où en outre le premier élément en plaque (140) est disposé de préférence à un espacement prédéterminé du deuxième élément en plaque (240).

11. Dispositif selon la revendication 10, où le premier et le deuxième stators (130, 230), le premier et le deuxième aimants (100, 200) et la première et la deuxième bobines (110, 210) sont disposés dans un espace formé par le premier et le deuxième éléments en plaque (140, 240).

12. Dispositif selon la revendication 11, où le premier et/ou le deuxième éléments en plaque (140, 240) comprennent au moins une fente d'air (250) pour empêcher la compression de l'air dans l'espace formé par le premier et le deuxième éléments en plaque (140, 240).

13. Dispositif selon l'une des revendications 1 à 12, comprenant en outre :
une quatrième bobine (410) ayant un nombre prédéterminé de spires, la quatrième bobine (410) étant disposée sur la face du premier aimant (100) distante du deuxième aimant (200).

14. Système, de préférence système de revêtement de sol, pour la conversion d'énergie mécanique en énergie électrique, comprenant au moins un dispositif selon l'une des revendications 1 à 9.

15. Système selon la revendication 14, où une pluralité de dispositifs selon l'une des revendications 1 à 9 sont disposés dans un espace formé par au moins un élément latéral, un élément de base et un élément de plafond, où la pluralité de dispositifs sont de préférence disposés de manière symétrique dans l'espace, et où, tout particulièrement, un premier dispositif est disposé de manière centrée dans l'espace et d'autres dispositifs de manière symétrique autour du premier dispositif dans l'espace.

Fig. 1a

Fig. 1b

Fig. 1c

Fig. 2a

Fig. 2b

Fig. 2c

Fig. 2d

Fig. 3

Fig. 4a

Fig. 4b

Fig. 4c

Fig. 4d

Fig. 4e

Fig. 4f

Fig. 5

Zeit =-1

0          35          70 (mm)

Fig. 6

Fig. 7a

Fig. 7b

Fig. 8a

Fig. 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1145225 B
- US 4239974 A
- US 2013342036 A1
- US 2007257495 A1
- KR 101958685 B1